# EUROPÄISCHE PATENTSCHRIFT

(11) **EP 2 512 667 B1**
(45) Veröffentlichungstag und Bekanntmachung des Hinweises auf die Patenterteilung: **25.10.2017**
(21) Anmeldenummer: 10787148.5
(22) Anmeldetag: 13.12.2010
(51) Int. Cl.: B01J 29/76

(54) **EISENHALTIGER ZEOLITH, VERFAHREN ZUR HERSTELLUNG EISENHALTIGER ZEOLITHE UND VERFAHREN ZUR KATALYTISCHEN REDUKTION VON STICKOXIDEN**
IRON ZEOLITES, METHOD FOR PRODUCING IRON ZEOLITES, AND METHOD FOR CATALYTICALLY REDUCING NITROGEN OXIDES
ZÉOLITE CONTENANT DU FER, PROCÉDÉ DE PRÉPARATION DE ZÉOLITES CONTENANT DU FER ET PROCÉDÉ DE RÉDUCTION CATALYTIQUE D'OXYDES D'AZOTE

(30) Priorität: 18.12.2009 US 287718 P
(43) Veröffentlichungstag der Anmeldung: 24.10.2012
(73) Patentinhaber: BASF SE, 67056 Ludwigshafen am Rhein (DE)
(72) Erfinder: GROSSSCHMIDT, DIRK, 68159 Mannheim (DE); YILMAZ, Bilge, Union, NJ 07083 (US); KLINGLER, Dirk, 68163 Mannheim (DE); ZOELS, Bernd, 67283 Obrigheim (DE)
(74) Vertreter: BASF IP Association
(86) Internationale Anmeldenummer: PCT/EP2010/069476
(87) Internationale Veröffentlichungsnummer: WO 2011/073123

(56) Entgegenhaltungen:
- EP-A1- 0 140 365
- EP-A2- 1 754 527
- WO-A1-00/72965
- WO-A2-98/57743
- WO-A2-2008/132452
- DE-B- 1 145 152
- US-A- 4 003 850
- DELAHAY G ET AL: "Selective Catalytic Reduction of Nitrous Oxide by Ammonia on Iron Zeolite Beta Catalysts in an Oxygen Rich Atmosphere: Effect of Iron Contents", JOURNAL OF CATALYSIS, ACADEMIC PRESS, DULUTH, MN, US, Bd. 202, Nr. 1, 15. August 2001 (2001-08-15), Seiten 156-162, XP002605660, ISSN: 0021-9517, DOI: DOI:10.1006/JCAT.2001.3279 [gefunden am 2002-03-12]
- LONG R Q ET AL: "Selective Catalytic Reduction of NO with Ammonia over Fe<3+>-Exchanged Mordenite (Fe-MOR): Catalytic Performance, Characterization, and Mechanistic Study", JOURNAL OF CATALYSIS, ACADEMIC PRESS, DULUTH, MN, US, Bd. 207, Nr. 2, 25. April 2002 (2002-04-25), Seiten 274-285, XP004461232, ISSN: 0021-9517, DOI: DOI:10.1006/JCAT.2002.3521
- S. LARS T. ANDERSSON ET AL: "An x-ray photoelectron study of metal clusters in zeolites", THE JOURNAL OF PHYSICAL CHEMISTRY, Bd. 93, Nr. 12, 1. Juni 1989 (1989-06-01), Seiten 4913-4920, XP55001250, ISSN: 0022-3654, DOI: 10.1021/j100349a047
- H.HAMMER ET AL.: "New Zeolites in Fischer-Tropsch Synthesis", INTERNATIONAL JOURNAL OF ENERGY RESEARCH, Bd. 18, 1994, Seiten 223-231, XP002646264,
- BEIN: "Photolytic and thermolytic decomposition products from iron pentacarbonyl adsorbed on Y zeolite", ZEOLITES, Bd. 5, Nr. 4, 1. Januar 1985 (1985-01-01), Seite 240, XP55001259, ISSN: 0144-2449
- BEIN T ET AL: "Interaction between zeolites and cluster compounds. Part 2. - Thermal decomposition of iron pentacarbonyl on zeolites", JOURNAL OF THE CHEMICAL SOCIETY. FARADAY TRANSACTIONS, ROYAL SOCIETY OF CHEMISTRY, CAMBRIDGE, GB, Bd. 80, 1. Januar 1984 (1984-01-01), Seiten 1391-1407, XP009145545, ISSN: 0956-5000

## Beschreibung

Die vorliegende Erfindung betrifft ein Verfahren zur Herstellung von eisenhaltigen zeolithischen Materials, das dadurch gekennzeichnet ist, dass die Dotierung mit Eisen über eine Gasphasenreaktion unter Verwendung von Eisenpentacarbonyl erfolgt.

Im Stand der Technik findet sich zahlreiche Literatur über die Verwendung von metallhaltigen Zeolithmaterialien als Katalysatoren oder als Adsorptionsmittel. Beispielweise kommen mit Metall dotierte Zeolithmaterialien als Katalysatoren bei der selektiven katalytischen Reduktion (SCR) von Stickoxiden zu Stickstoff und Wasser in der Abgasreinigungstechnik zum Einsatz.

Beispielsweise beschreibt US 4,961,917 die Verwendung von Eisen oder Kupfer dotierten Zeolithen im katalytischen Verfahren zur Reduzierung von Stickoxiden in Gegenwart von Ammoniak und Sauerstoff. Als Katalysator wird ein Zeolith mit einem Siliziumdioxid zu Aluminiumoxidverhältnis von wenigstens 10 beschrieben. Dieser Zeolith weist eine Porenstruktur auf, die in allen drei kristallographischen Dimensionen durch Poren verbunden ist, wobei die Poren einen durchschnittlichen kinetischen Porendurchmesser von wenigstens 7 Å aufweisen. Die Eisen- und/oder Kupferpromotoren liegen in einer Menge von 0,1 bis 30 Gew.-% des Gesamtgewichts von Promotor plus Zeolith vor. Der Zeolith ist ausgewählt aus der Gruppe bestehend aus USY, Beta und ZSM-20. Als Eisen oder Kupferquelle werden Sulfate eingesetzt.

Aufgrund der schädlichen Auswirkung von Stickoxidemissionen auf die Umwelt ist es ein wichtiges Anliegen, diese Emissionen weiter zu verringern. Für die nahe Zukunft sind bereits deutlich tiefere NOₓ-Grenzwerte für stationäre und KFZ Abgase als heutzutage üblich vorgesehen.

Die Entstickung von Verbrennungsgasen wird auch als DeNOₓ, bezeichnet. In der Automobiltechnik ist die selektive katalytische Reduktion (SCR) eine der wichtigsten DeNOₓ-Techniken. Als Reduktionsmittel dienen üblicherweise Kohlenwasserstoffe (HCSCR) oder Ammoniak (NH3-SCR) bzw. NH3-Vorläufer wie Harnstoff (Ad-Blue®). Dabei haben sich mit Metall dotierte Zeolithe als sehr aktive und in einem weiten Temperaturbereich einsetzbare SCR Katalysatoren erwiesen.

Übliche Verfahren, Zeolithe mit Metallen zu dotieren, umfassen beispielsweise Methoden wie flüssigen Ionenaustausch, Festphasenionenaustausch, Dampfphasenionenaustausch, mechanisch-chemische Verfahren, Imprägnierungsverfahren und die so genannten Ex-Gerüst-Verfahren.

Derzeit wird die Dotierung überwiegend via flüssigen Ionenaustausch vorgenommen. Zunächst wird das Zeolithmaterial in einer Hydrohtermalsynthese hergestellt, kristallisiert und kalziniert. Durch die Kalzinierung werden die organischen Bestandteile abgebrannt, und das Zeolithmaterial wird üblicherweise in der H- oder Na-Form erhalten. Nach der Kalzination werden Ammoniumionen in das Zeolithmaterial eingetauscht, der Zeolith wird erneut kalziniert und es werden anschließend die gewünschten Metallionen eingetauscht.

Bekannt ist ferner das Dotieren von Zeolithen mit Eisen durch Festkörperionenaustausch (EP 0 955 080 B1), wobei eine Mischung aus dem gewünschten Zeolith, einer Metallverbindung und einer Ammoniumverbindung unter Schutzgasatmosphäre gesintert wird, so dass metallhaltige Katalysatoren mit einer erhöhten Langzeitstabilität erhalten werden.

Probleme ergeben sich insbesondere beim Dotieren bzw. Einbringen von der Dotierungsmetalle in den Zeolithen, da oftmals verschiedene Oxidationsstufen dieser katalytisch aktiven Metalle nebeneinander vorliegen und nicht immer die gewünschten katalytisch aktiven Spezies erhalten wird bzw. die katalytisch aktiven Spezies sich aufgrund der Reaktionsbedingungen des Dotierungsverfahrens zu katalytisch inaktiven Spezies umwandeln.

Es hat sich jedoch gezeigt, dass bei praktisch sämtlichen bekannten Verfahren des Standes der Technik Cluster-Spezies der katalytisch aktiven Metalle durch den Metallaustausch im Innern des Zeolithen entstehen, die katalytisch inaktiv sind, bzw. die katalytische Aktivität extrem herabsetzen. Ferner wirken sich die Cluster negativ auf die Stabilität des Zeolithmaterial aus. Unter dem Begriff "Cluster" werden dabei mehrkernige verbrückte oder unverbrückte Metallverbindungen verstanden, die mindestens drei gleiche oder verschiedene Metallatome enthalten.

Inaktive Metallcluster erniedrigen darüber hinaus das Porenvolumen und hindern die Gasdiffusion oder führen zu unerwünschten Nebenreaktionen.

WO 2008/141823 offenbart zum ersten Mal metallhaltige Zeolithe, bei denen im Inneren des Zeolithgerüsts keine Metallcluster nachgewiesen werden konnten. Es wird beschrieben, dass der metallausgetauschte Zeolith frei von katalytisch inaktiven bzw. katalytisch weniger aktiven Metallclustern ist, so dass nur monomere oder dimere katalytisch hochaktive Metallspezies in der Porenstruktur vorliegen. Diese Zeolithe können erhalten werden, in dem zunächst eine wässrige bzw. Wasser enthaltende Aufschlämmung eines Zeolithen hergestellt wird und anschließend a) Erhöhens des pH-Werts der Aufschlämmung auf einen Wert im Bereich von 8 bis 10, bevorzugt unter Verwendung von NH₄OH und Einstellens des Sauerstoffgehalts im Reaktionsgefäß auf einen Wert von < 10 %, b) Erniedrigens des pH-Werts auf einen Wert im Bereich von 1,5 bis 6, c) Zugebens eines Metallsalzes und Umsetzens über einen Zeitraum von 1 bis 15 Stunden, d) Abfiltrierens und Waschens des metalldotierten Zeolithen.

Ein weiteres Problem des wässrigen Ionenaustausches ist, dass üblicherweise die Metallkonzentration an der Oberfläche höher ist als im Inneren des Zeolithmaterial. Folglich führt der wässrige Ionenaustausch zu einer inhomogene Verteilung der Dotierungsmetalle im Zeolithmaterial.

Nachteilig an den beschriebenen Zeolith-Dotierungsverfahren ist allerdings, dass die jeweilige maximale Menge an aufzunehmenden Dotierungsmetallen durch die Anzahl an Kationen-Positionen der jeweiligen Zeolithe begrenzt ist. Hieraus folgt, dass für eine Anwendung, die eine bestimmte Menge an Dotierungsmetall benötigt, nicht alle Zeolithe zur Verfügung stehen, sondern nur solche, die die gewünschte Anzahl an Kationen-Positionen aufweisen. Nachteilig ist ferner, dass die Zeolithe, die eine höhere Anzahl an Kationen-Positionen aufweisen und demnach eine größere Menge an Dotierungsmetallen aufnehmen können, instabiler sind (z.B. nach einer Alterung) als solche mit einer niedrigeren Anzahl an Kationen-Positionen.

Nachteilig an den beschriebenen Zeolith-Dotierungsverfahren ist darüber hinaus, dass diese Dotierungsverfahren viele Reaktionsstufen aufweisen und jede Reaktionsstufe eine Schädigung des Zeolthgerüsts und folglich eine Verminderung der spezifischen Oberfläche und somit der hydrothermalen Stabilität bedeuten kann.

Bislang bliebt im Stand der Technik der DeNOₓ SCR-Technologie unbeachtet, dass sich Eisenpentacarbonyl als Eisenquelle bei der Herstellung von Eisen dotierten Zeolithen eignet.
Bereits US 2,533,071 beschreibt die Herstellung von metallischen Eisen-Katalysatoren durch Erhitzen von Eisenpentacarbonyl auf einem Träger, so dass sich Eisenpentacarbonyl zu Eisen und CO zersetzt und sich Eisen auf dem Träger abscheidet. Der Katalysator wird zur Synthese von Kohlenwasserstoffen aus CO und H₂ eingesetzt. Als bevorzugter Träger werden synthetische Spinelle beschrieben. Ferner werden Kompositionen aus beispielsweise 12,5 % Siliciumoxid und 87,5 % Aluminiumoxid erwähnt.

Ferner beschreibt US 4,003,850 ein Verfahren zur Herstellung von Eisenoxid-Katalysatoren, wobei ein geeigneter Träger Eisenpentacarbonyl absorbiert und anschließend das Eisenpentacarbonyl zu Eisenoxid oxidiert wird. Als Träger werden unter anderen Zeolithe beschrieben. Es wird die Verwendung zur Reduktion von Stickoxiden aus Abgasen mit Hilfe von Kohlenstoffmonoxid bei einem Druck von größer gleich 1 bar beschrieben. In den Beispielen der US 4,003,850 werden Alcoa H-151 (aktivierter Aluminiumoxid), Harshaw AL-1602 (Silizium-Aluminiumoxid mit 91 Al₂O₃, 6 SiO₂), Alcoa F-1 4-10 (aktivierter Aluminiumoxid), Linde 13X (Zeolith mit Na₂O.Al₂O₃.2,5SiO₂) und Hatshaw Fe-0301(eisenhaltiger aktivierter Aluminiumoxid) eingesetzt.

CN 101099932 A beschreibt die Herstellung von Eisen dotierten Katalysatoren, wobei die Eisenpartikel eine Partikelgröße von kleiner als 100 nm aufweisen. Die Katalysatoren werden unter Verwendung von Eisenpentacarbonyl, das in situ in Eisen zerfällt, hergestellt. Als Verwendung dieser Eisen dotierten Katalysatoren werden chemische Verfahren zur Kohleumwandlung (z.B. Kohleverflüssigung), das Petroleumrefining und die Ammoniaksynthese genannt. Das Verfahren zur Herstellung dieser Eisen dotierten Katalysatoren enthält mehrere Stufen: (i) Überführen des Katalysatorträgers in einen Autoklaven, diesen unter Vakuum setzen oder die Luft im Autoklaven durch Stickstoff oder Inertgas ersetzen; (ii) Hinzufügen von Eisenpentacarbonyl; (iii) Aufheizen bis zu einer Temperatur und Halten bei dieser Temperatur, bei der Eisenpentacarbonyl evaporiert und in den Katalysatorträger penetriert; (iv) weiteres Aufheizen oder Stickstoff oder ein anderes inertes Gas mittels hohem Druck einführen, so dass das Eisenpentacarbonyl, das im Träger vorliegt, in situ in Eisen, das Partikelgrößen im Nanometerbereich aufweist, zerfällt. Als mögliche Träger werden Zeolithe, Aktivkohle, γ-Al₂O₃, Kieselgur und Kohle genannt.

WO 98/57743 beschreibt die Verwendung von Eisen dotierten Zeolithen, die u.a. unter Verwendung von Eisencarbonylen als Eisenquelle hergestellt wurden, als Katalysator bei der Umwandlung von Synthesegas zu Olefinen, insbesondere Ethylen, Propylen und Buten. In den Beispielen werden ZSM-5, SAPO-34 und SAPO-17 eingesetzt.

Bein beschreibt einen mit Eisen beladenen Faujasiten (Zeolites, Bd. 5, Nr. 4, 1985, S. 240). Ein Natrium-Faujasith wird mit trockenem Eisenpentacarbonyldampf bei 295 K und 870 Pa Gleichgewichtsdruck für 14 ks beladen. Nach Evakuierung des Systems wird eine thermische Zersetzung bei 470 Kin einer 48 kPa Helium-Atmosphäre für 1.2 ks durchgeführt.

DE 11 45 152 B offenbart die Herstellung von eisenbeladenem Zeolith X. In einem ersten Schritt wird flüchtiges Eisenpentacarbonyl unter vermindertem Druck an aktiviertem Zeolith X adsorbiert. Danach wird unter einem Stickstoffstrom auf 250 °C erhitzt, so dass sich das Eisenpentacarbonyl zersetzt.

BEIN et al. beschreiben die Herstellung verschiedener eisenbeladener Zeolithe (J. Chem. Soc., Faraday Trans., Bd. 80, 1984, S. 1391-1407). Zeolithe wie NaY, CsY, DAY, HY, TMA-omega, Linde L und Na-Mordenith werden mit Eisenpentacarbonyldampf bei Raumtemperatur beladen. Dann erfolgt eine thermische Zersetzung unter einem Heliumstrom oder im Vakuum.

Trotz umfangreicher Literatur auf dem Gebiet der Dotierung von Trägern via Gasphasenreaktion, wurde bislang noch keine Verwendung dieses Verfahrens für die Herstellung von SCR-Katalysatoren beschrieben. Ferner wurde bislang noch nicht das Potential der Gasphasenreaktion in Hinblick auf eine über die durch die Kationen-Positionen limitierte Beladung hinausgehende Beladung mit Dotierungsmetallen entdeckt.

Aufgabe der vorliegenden Erfindung war es daher, ein Verfahren bereitzustellen, dass eine Dotierung von Zeolithen ermöglicht, wobei die Menge an Dotierungsmetall unabhängig von dem zu dotierenden Zeolithen, d.h. seinen Kationen-Positionen, ist. Ferner war es Aufgabe der vorliegenden Erfindung, ein eisenhaltiges zeolitisches Material bereitzustellen, dass eine hohe spezifische Oberfläche aufweist und folglich eine hohe hydrothermale Stabilität besitzt. Darüber hinaus war es Aufgabe der vorliegenden Erfindung, ein eisenhaltiges zeolitisches Material bereitzustellen, das eine homogene Verteilung des Eisens und keine Eisenagglomerate/Eisencluster im zeolitisches Material aufweist. Eine weitere Aufgabe der vorliegenden Erfindung war es, ein eisenhaltiges zeolitisches Material bereitzustellen, das nur minimale Ablagerungen von Eisen außerhalb der Poren aufweist. Darüber hinaus war Aufgabe der vorliegenden Erfindung, ein im Vergleich zum wässrigen Ionenaustausch kostengünstiges Verfahren aufzuzeigen. Ferner war es Aufgabe der vorliegenden Erfindung, einen SCR-Katalysator bereitzustellen, der eine im Vergleich zum Stand der Technik verbesserte NOx Umsatz aufweist.

### Verfahren zur Herstellung des zeolithischen Materials:

Die vorliegende Erfindung betrifft ein Verfahren zur Herstellung eines eisenhaltigen zeolithischen Materials (z.B. eisenhaltiger Zeoltih der Struktur CHA), das dadurch gekennzeichnet ist, dass die Dotierung mit Eisen über eine Gasphasenreaktion unter Verwendung von Eisenpentacarbonyl erfolgt.

Unter dem Begriff "Zeolith" wird im Rahmen der vorliegenden Erfindung gemäß der Definition der International Mineralogical Association (D.S. Coornbs et al., Can. Mineralogist, 35, 1997, 1571) eine kristalline Substanz aus der Gruppe der Aluminiumsilikate mit Raumnetzstruktur der allgemeinen Formel

Mⁿ⁺ₙ[(AlO₂)ₓ(SiO₂)_{y}]i^{t}H₂O

verstanden, die aus SiO₄/AlO₄ Tetraedern bestehen, die durch gemeinsame Sauerstoffatome zu einem regelmäßigen dreidimensionalen Netzwerk verknüpft sind. Weitere Ausführungen finden sich beispielsweise in WO 2008/141823 auf den Seiten 5 bis 6.

Grundsätzlich kann im Rahmen der vorliegenden Erfindung jedes beliebige zeolithische Material verwendet werden. Erfindungsgemäß sind zeolithische Materialien mit den Topologien CHA oder LEV (zum Beispiel RUB-50 oder ZSM-45). Ganz besonders bevorzugt ist zeolithisches Material der topologischen Struktur CHA. Vorteilhaft sind die Zeolithen Linde 13X, ZSM-5, SAPO-34 und SAPO-17 ausgenommen.

Weiter sind so genannte Silikoaluminiumphosphate (SAPOs) erfindungsgemäß verwendbar, die aus isomorph ausgetauschten Aluminiumphosphaten entstanden sind.

Das zeolithische Material weist vorteilhaft eine spezifische Oberfläche BET von 10 bis 1000 g/m² auf, bevorzugt 150 bis 800 g/m², insbesondere 300 bis 700 g/m².

Bei einem zeolithischen Material beinhaltend Silizium und Aluminium liegt das Siliziumdioxid-Aluminiumoxid-Verhältnis vorteilhaft bei größer 1, bevorzugt bei 3 bis 500, insbesondere bei 6 bis 60.

Die Zeolithe weisen vorteilhaft einen mittleren Porendurchmesser von 0,2 bis 2 nm auf, bevorzugt 0,3 bis 1 nm insbesondere 0,35 bis 0,8 nm.

Das erfindungsgemäße Verfahren wird in zwei Teilschritten, (i) Gasphasenbeladung und (ii) thermische Zersetzung durchgeführt.

### Bevorzugt wird der Gasphasenprozess (i) folgendermaßen durchgeführt:

Im ersten Schritt (i) wird das zeolithische Material von gasförmigem Eisenpentacarbonyl durchströmt. Das Eisenpentacarbonyl kann vorteilhaft in einem Trägergas vorliegen. Als Trägergase werden vorteilhaft inerte Gase wie Kohlenmonoxid, Kohlendioxid, Stickstoff, Helium oder Argon oder deren Mischungen verwendet. Besonders bevorzugt werden Kohlenmonoxid oder Stickstoff eingesetzt.

Die Konzentration an Eisenpentacarbonyl im Gasstrom liegt vorteilhaft bei 0,1 bis 100 Vol.-%, bevorzugt 0,5 bis 20 Vol.-%, insbesondere bei 1 bis 5 Vol.-%.

Die Temperatur des Verfahrensschritts (i) liegt vorteilhaft bei 10 bis 250°C, bevorzugt 20 bis 200°C, insbesondere 50 bis 150°C.

Der Druck des Verfahrensschritts (i) liegt vorteilhaft bei 0,1 bis 10 bar, bevorzugt 0,5 bis 2 bar, insbesondere 0,9 bis 1,2 bar, wobei der Druck stromabwärts des Zeolithbetts gemessen wird.

Die Reaktionszeit des Verfahrensschritt (i) liegt vorteilhaft bei 0,1 min bis 10 h, bevorzugt 0,5 min bis 5 h, insbesondere 1 bis 120 min.

Im zweiten Schritt (ii) wird das mit Eisenpentacarbonyl beladene zeolithische Material von heißem Trägergas durchströmt. Als Trägergas werden vorteilhaft Luft oder inerte Gase wie Stickstoff oder Argon oder deren Mischungen eingesetzt. Besonders bevorzugt werden Stickstoff oder Luft eingesetzt.

Die Temperatur des Trägergases des Verfahrensschritts (ii) liegt vorteilhaft bei 10 bis 500°C, bevorzugt 50 bis 400°C, insbesondere 100 bis 350°C.

Der Druck des Verfahrensschritts (ii) (Druck stromabwärts des Zeolithbetts) liegt vorteilhaft bei 0,1 bis 10 bar, bevorzugt 0,5 bis 2 bar, insbesondere 0,9 bis 1,2 bar.

Die Reaktionszeit des Verfahrensschritt (i) liegt vorteilhaft bei 0,1 min bis 10 h, bevorzugt 0,5 min bis 5 h, insbesondere 1 bis 120 min.

Für zeolithisches Material mit einem Porendurchmesser kleiner 0,5 bis 0,7 nm schliesst sich ein dritter Schritt (iii) an, bei welchem das zeolithische Material von heißem Trägergas mit höherer Temperatur als in Schritt (ii) durchströmt wird. Außerhalb der Poren abgelagertes Eisen wird hierüber in die Poren getrieben.

Als Trägergas wird Wasserdampf eingesetzt.

Die Temperatur des Verfahrensschritts (iii) liegt bei 500 bis 1000°C, bevorzugt 600 bis 900°C, insbesondere 650 bis 850°C.

Der Druck des Verfahrensschritts (iii) (Druck stromabwärts des Zeolithbetts) liegt bei 0,1 bis 10 bevorzugt 0,5 bis 2 bar, insbesondere 0,9 bis 1,2 bar.

Die Reaktionszeit des Verfahrensschritt (i) liegt vorteilhaft bei 1 min bis 240 h. Unter Verwendung von niedrigen Temperaturen im bereich 500 bis 750°C liegt die Reaktionszeit bevorzugt bei 1 h bis 240 h, insbesondere bei 2 h bis 150 h. Unter Verwendung von hohen Temperaturen im Bereich 750 bis 1000°C liegt die Reaktionszeit bevorzugt bei 1 min bis 150 h, insbesondere bei 10 min bis 100 h.

### Verwendung des zeolitischen Materials:

Ferner betrifft die vorliegende Erfindung die Verwendung des erfindungsgemäß hergestellten eisenhaltigen zeolithischen Materials als Katalysator inTransformationareaktionen von Kohlenwasserstoffen, in Oxidationsreaktionen, in der Fischer-Tropsch-Reaktion und in der selektiven katalytischen Reduktion von Stickoxiden.

Die selektive katalytische Reduktion von Stickoxiden wird vorteilhaft unter Zusatz von Ammoniak oder Ammoniak-Vorläufern wie beispielsweise Harnstoff durchgeführt.

### Vorteile:

Durch das erfindungsgemäße Verfahren lassen sich eisenhaltige zeolithische Materialien herstellen, die einen Eisengehalt aufweisen, der über dem durch die Kationen-Positionen limitierten Eisengehalt liegt. Ferner lassen sich eisenhaltige zeolithische Materialien herstellen, die eine höhere spezifische Oberfläche aufweisen als analog hergestellte eisenhaltige zeolithische Materialien via Ionenaustauschreaktion. Folglich besitzen die erfindungsgemäßen eisenhaltigen Zeolithe eine größere hydrothermale Stabilität. Darüber hinaus lassen sich eisenhaltige zeolithische Materialien mit homogener und selektiver Verteilung des metallischen Eisens in den Poren herstellen. Desweiteren wird keine Ablagerung von Eisen außerhalb der Poren erhalten. Zudem kann gegenüber herkömmlichen nasschemischen Verfahren die Herstellung kostengünstiger in den zwei Teilschritten Gasphasenbeladung und thermische Zersetzung erfolgen. Ferner zeichnet sich das erfindungsgemäße eisenhaltige zeolitische Material durch eine hohe Abgas-Abbauaktivität im DENOX-Verfahren aus.

### Beispiele

### 1. Herstellung des eisenhaltigen zeolitischen Materials

### Beispiel 1 (weiteres Beispiel)

### Beladung von Zeolith Beta mit 2,4 Gew.-% Fe

15 g Zeolith Beta wurden bei 115°C und leichtem Unterdruck (-15 mbar) für 31 min mit einem Gasstrom aus 1,2 Vol.-% Eisenpentacarbonyl in Kohlenmonoxid durchströmt. Danach wurde der Schüttungsbehälter mit dem Zeolithen außen auf 200°C geheizt und bei leichtem Unterdruck (-15 mbar) von Argon bei 200°C für 25 min durchströmt. Der erhaltene Katalysator zeigte in einer TEM (Transmissionselektronenmikroskop) Untersuchung keine Ablagerung von Eisen außerhalb der Poren. Röntgenspektroskopiemessungen EDX belegen eine homogene Verteilung des Eisens auf dem Zeolithträger.

### Beispiel 2 (weiteres Beispiel)

### Beladung von Zeolith Beta mit 1,6 Gew.-% Fe

14 g Zeolith Beta wurden bei leichtem Unterdruck (-15 mbar) für 31 min mit einem 150°C heißen Gasstrom aus 1,2 Vol.-% Eisenpentacarbonyl in Argon durchströmt. Bei diesem Versuch wurde der Schüttungsbehälter mit dem Zeolithen von Anfang an außen auf 200°C geheizt. Danach wurde die Schüttung direkt bei leichtem Unterdruck (--15 mbar) von Argon bei 200°C für 28 min durchströmt.

### Beispiel 3 (weiteres Beispiel)

### Beladung von Zeolith Beta mit 5 Gew.-% Fe

12 g Zeolith Beta wurden bei 115°C und leichtem Unterdruck (-15 mbar) für 27 min mit einem Gasstrom aus 1,2 Vol.-% Eisenpentacarbonyl in Kohlenmonoxid durchströmt. Danach wurde der Schüttungsbehälter mit dem Zeolithen außen auf 200°C geheizt und bei leichtem Unterdruck (-15 mbar) von Argon bei 200°C für 22 min durchströmt.

### Beispiel 4 (erfindungsgemäßes Beispiel)

### Beladung von Chabazit SSZ-13 mit 1,4 Gew.-% Fe

11 g Zeolith wurden bei 115°C und leichtem Unterdruck (-15 mbar) für 31 min mit einem Gasstrom aus 1,2 Vol.-% Eisenpentacarbonyl in Kohlenmonoxid durchströmt. Danach wurde der Schüttungsbehälter mit dem Zeolithen außen auf 200°C geheizt und bei leichtem Unterdruck (-15 mbar) von Argon mit 200°C für 22 min durchströmt. Der Katalysator wurde anschließend für 48h mit Wasserdampf bei 700°C behandelt.

### 2. Katalytischer Test

Der Umsatz wurde mit Hilfe einer Gasmischung von 500 ppm NO, 500 ppm NH3, 10% 02, 5 % H2O in He mit volumenbasierten Raumgeschwindigkeit (volume-based gas hourly space velocity GH) 80000 h-1 über eine Pulverschüttung im Ofen bestimmt. Als Referenzkatalysator wurde ein über Ionenaustausch nach Standardvorschrift hergestellter Zeolith Beta mit 1,4 Gew.-% Fe und 0,15 Gew.-% CeO₂ verwendet. Die Ergebnisse sind in der Tabelle 1 dargestellt:

**Tabelle 1:**

| | Umsatz bei 200°C [%] | Umsatz bei 400°C [%] | Umsatz bei 500°C [%] |
|---|---|---|---|
| Referenz | 13 | 49 | 42 |
| Beispiel 1 | 22 | 58 | 57 |
| Beispiel 2 | 27 | 62 | 62 |
| Beispiel 3 | 26 | 62 | 61 |
| Beispiel 4 | 18 | 48 | 45 |

### 3. Stabilitätsvergleich von eisenhaltigen zeolitischen Material (weiteres Beispiel)

Es wurde die spezifische Oberfläche (i) eines eisenhaltigen Betas hergestellt via Gasphasenreaktion (1,2 Gew.-% Fe) und (ii) eines eisenhaltigen Betas hergestellt via Ionenaustauschreaktion (1,5 Gew.-% Fe) nach einer Alterung bei 750°C und 10 % Wasserdampf für 24 Stunden bestimmt (DIN 66135).

| | Langmuir [m²/g] nach Alterung |
|---|---|
| (i) eisenhaltiger Beta via Gasphasenreaktion | 714,3 |
| (ii) eisenhaltiger Beta via Ionenaustauschreaktion | 610,6 |

## Patentansprüche

1. Verfahren zur Herstellung eines eisenhaltigen zeolithischen Materials mit den Topologien CHA oder LEV, **dadurch gekennzeichnet, dass** die Dotierung mit Eisen über eine Gasphasenreaktion unter Verwendung von Eisenpentacarbonyl erfolgt und die Dotierung mit Eisen in zwei Teilschritten (i) Gasphasenbeladung und (ii) thermische Zersetzung durchgeführt wird,
**dadurch gekennzeichnet, dass** in einem weiteren Teilschritt (iii), das zeolithische Material von einem Trägergas mit Temperaturen von 500 bis 1000°C bei einem Druck von 0,1 bis 10 bar durchströmt wird,
wobei als Trägergas Wasserdampf eingesetzt wird.

2. Verfahren nach Anspruch 1, **dadurch gekennzeichnet, dass** das zeolithische Material eine spezifische Oberfläche BET von 10 bis 1000 m²/g, bevorzugt 150 bis 800 m²/g, insbesondere 300 bis 700 m²/g aufweist.

3. Verfahren nach den Ansprüchen 1 oder 2, **dadurch gekennzeichnet, dass** das Siliziumdioxid-Aluminiumoxid-Verhältnis bei dem zeolithischen Material beinhaltend Silizium und Aluminium bei größer 1, bevorzugt bei 3 bis 500, insbesondere bei 6 bis 60 liegt.

4. Verfahren nach den Ansprüchen 1 bis 3, **dadurch gekennzeichnet, dass** im Teilschritt (i) das zeolithische Material von gasförmigen Eisenpentacarbonyl mit einer Konzentration von Eisenpentacarbonyl im Gasstrom von 0,1 bis 100 Vol.-% bei einer Temperatur von 10 bis 250°C, einem Druck von 0,1 bis 10 bar für eine Dauer von 0,1 min bis 10 h durchströmt wird.

5. Verfahren nach den Ansprüchen 1 bis 4, **dadurch gekennzeichnet, dass** im Teilschritt (ii) das mit Eisenpentacarbonyl beladene zeolithische Material mit Trägergas durchströmt wird, wobei die Temperatur des Schritt (ii) 10 bis 500°C, der Druck 0,1 bis 10 bar und die Reaktionszeit 0,1 min bis 10 h beträgt.

## Claims

1. A process for preparing an iron-containing zeolitic material with the CHA or LEV topologies, which comprises doping with iron by means of a gas phase reaction using iron pentacarbonyl and performing the doping with iron in two component steps: (i) gas phase loading and (ii) thermal decomposition,
wherein, in a further component step (iii), a carrier gas is flowed through the zeolitic material at temperatures of 500 to 1000°C at a pressure of 0.1 to 10 bar,
the carrier gas used being steam.

2. The process according to claim 1, wherein the zeolitic material has a specific BET surface area of 10 to 1000 m²/g, preferably 150 to 800 m²/g, especially 300 to 700 m²/g.

3. The process according to claims 1 and 2, wherein the silicon dioxide-aluminum oxide ratio in the zeolitic material comprising silicon and aluminum is greater than 1, preferably 3 to 500, especially 6 to 60.

4. The process according to claims 1 to 3, wherein, in component step (i), gaseous iron pentacarbonyl at a concentration of iron pentacarbonyl in the gas stream of 0.1 to 100% by volume is flowed through the zeolitic material at a temperature of 10 to 250°C and a pressure of 0.1 to 10 bar for a period of 0.1 min to 10 h.

5. The process according to claims 1 to 4, wherein, in component step (ii), carrier gas is flowed through the zeolitic material laden with iron pentacarbonyl, the temperature in step (ii) being 10 to 500°C, the pressure 0.1 to 10 bar and the reaction time 0.1 min to 10 h.

## Revendications

1. Procédé de fabrication d'un matériau zéolitique contenant du fer ayant la topologie CHA ou LEV, **caractérisé en ce que** le dopage avec du fer a lieu par une réaction en phase gazeuse utilisant du pentacarbonyle de fer et le dopage avec du fer est réalisé en deux étapes partielles : (i) le chargement en phase gazeuse et (ii) la décomposition thermique,
**caractérisé en ce que**, lors d'une étape partielle supplémentaire (iii), le matériau zéolitique est traversé par un gaz vecteur ayant des températures de 500 à 1 000 °C à une pression de 0,1 à 10 bar,
de la vapeur d'eau étant utilisée en tant que gaz vecteur.

2. Procédé selon la revendication 1, **caractérisé en ce que** le matériau zéolitique présente une surface spécifique BET de 10 à 1 000 m²/g, de préférence de 150 à 800 m²/g, notamment de 300 à 700 m²/g.

3. Procédé selon la revendication 1 ou 2, **caractérisé en ce que** le rapport entre le dioxyde de silicium et l'oxyde d'aluminium dans le matériau zéolitique contenant du silicium et de l'aluminium est supérieur à 1, de préférence de 3 à 500, notamment de 6 à 60.

4. Procédé selon les revendications 1 à 3, **caractérisé en ce que**, lors de l'étape partielle (i), le matériau zéolitique est traversé par du pentacarbonyle de fer gazeux ayant une concentration en pentacarbonyle de fer dans le courant gazeux de 0,1 à 100 % en volume à une température de 10 à 250 °C, une pression de 0,1 à 10 bar, pendant une durée de 0,1 minute à 10 h.

5. Procédé selon les revendications 1 à 4, **caractérisé en ce que**, lors de l'étape partielle (ii), le matériau zéolitique chargé avec du pentacarbonyle de fer est traversé par un gaz vecteur, la température à l'étape (ii) étant de 10 à 500 °C, la pression de 0,1 à 10 bar et la durée de réaction de 0,1 minute à 10 h.
